# EUROPEAN PATENT APPLICATION

(11) **EP 4 834 626 A1**
(43) Date of publication of application: **04.11.2026**
(21) Application number: 24912106.2
(22) Date of filing: 20.11.2024
(51) Int. Cl.: B60K 11/02, B60K 1/04, B60L 3/00, B60L 9/18, B60L 15/20, B60L 50/60, B60L 58/26, H02M 7/48

(54) **ELECTRIC TRACTOR**

(30) Priority: 27.12.2023 JP 2023221634; 27.12.2023 JP 2023221635; 27.12.2023 JP 2023221636
(71) Applicant: Kubota Corporation, Osaka-shi, Osaka 530-0011 (JP)
(72) Inventor: MATSUMOTO, Ryunosuke, Sakai-shi, Osaka 590-0908 (JP); MISHIMA, Tomohiro, Sakai-shi, Osaka 590-0908 (JP); YAMAGISHI, Ryota, Sakai-shi, Osaka 590-0908 (JP); YOSHIDA, Yumi, Sakai-shi, Osaka 590-0908 (JP); SAWAI, Megumi, Sakai-shi, Osaka 590-0908 (JP); MATSUBARA, Tomoyuki, Sakai-shi, Osaka 590-0908 (JP); SHIOZAKI, Masato, Sakai-shi, Osaka 590-0908 (JP); KAIDA, Manato, Sakai-shi, Osaka 590-0908 (JP)
(74) Representative: Schlegel, Sebastian
(86) International application number: PCT/JP2024/041140
(87) International publication number: WO 2025/142213

(57) **Abstract**

An electric tractor includes: a travel device configured to be driven by a first motor (11); a transmission section configured to transmit driving force of a second motor (12) to a work device; and a cooling path (J1) in which a coolant is circulatable. The cooling path (J1) includes: a radiator (38) configured to cool the coolant; a first path (P1) through which the coolant flows from the radiator (38) toward the first motor (11); a second path (P2) through which the coolant flows from the first motor (11) toward the second motor (12); and a third path (P3) through which the coolant flows from the second motor (12) toward the radiator (38). (Fig. 12)

## Description

### Technical Field

The present invention relates to an electric tractor.

### Background Art

A work vehicle described in Patent Document 1 (referred to as a "tractor" in Patent Document 1) includes an engine and travel devices (referred to as "front wheels" and "rear wheels" in Patent Document 1) driven by the engine. The engine is housed in a hood (referred to as an "engine hood" in Patent Document 1).

### Prior Art Documents

### Patent Documents

Patent Document 1: JP 2018-69926A

### Disclosure of the Invention

### Problem to be Solved by the Invention

It is conceivable that the work vehicle described in Patent Document 1 includes a battery and a motor instead of the engine. This configuration enables the work vehicle to travel without emitting exhaust gas.

However, in the case where the work vehicle is equipped with a travel device and a work device (e.g., a rotary tiller etc.), relatively high power (horsepower) is required to suitably drive the travel device and the work device. Therefore, a configuration in which a single motor is used as a power source to drive the travel device and the work device is expected to result in a shortage of power.

An object of the present invention is to provide an electric tractor that is capable of suitably driving a travel device and a work device and has good traveling performance.

An object of the present invention is to provide an electric tractor that is capable of suitably driving a travel device and a work device and has good work performance.

It is conceivable that the work vehicle described in Patent Document 1 includes a battery and a motor instead of the engine. This configuration enables the work vehicle to travel without emitting exhaust gas.

Further, in this configuration, it is conceivable that a cooling path in which a coolant circulates is provided, and that the cooling path includes a motor, a battery, and a radiator for cooling the coolant.

However, in this configuration, for example, if the coolant that has passed through the radiator passes through the battery before the motor, it is relatively difficult to cool the motor. Conversely, if the coolant that has passed through the radiator passes through the motor before the battery, it is relatively difficult to cool the battery.

An object of the present invention is to provide an electric tractor in which a motor and a battery are effectively cooled.

### Means for Solving Problem

A solving means corresponding to problem [1] is as follows.

The present invention is characterized by an electric tractor including: a battery; a first motor and a second motor configured to perform driving with use of electric power supplied from the battery; a travel device configured to be driven by the first motor; a transmission section configured to transmit driving force of the second motor to a work device; a hydraulic pump configured to be driven by the second motor; and a cooling path in which a coolant is circulatable, wherein the cooling path includes: a radiator configured to cool the coolant; a first path through which the coolant is flowable from the radiator toward the first motor; a second path through which the coolant is flowable from the first motor toward the second motor; and a third path through which the coolant is flowable from the second motor toward the radiator.

According to this configuration, the first motor, which is a power source of the travel device, and the second motor, which is a power source of the work device, are provided. This facilitates reliably obtaining power (horsepower) required to suitably drive the travel device and the work device compared to a case in which a single motor is used as a power source to drive the travel device and the work device.

Moreover, according to this configuration, the coolant that has passed through the radiator passes through the first motor before the second motor. Thus, the first motor is preferentially cooled. Accordingly, deterioration of the traveling performance due to an increase in the temperature of the first motor can be prevented.

That is, according to this configuration, it is possible to realize an electric tractor that is capable of suitably driving the travel device and the work device and has good traveling performance.

Furthermore, in the present invention, preferably, the electric tractor further includes a first inverter configured to convert DC power from the battery into AC power and supply the AC power to the first motor, wherein the first inverter is included in the first path.

According to this configuration, the coolant that has passed through the radiator passes through the first inverter before the second motor. Thus, the first inverter is preferentially cooled. Accordingly, deterioration of the traveling performance due to an increase in the temperature of the first inverter can be prevented.

Furthermore, in the present invention, preferably, the electric tractor further includes a second inverter configured to convert DC power from the battery into AC power and supply the AC power to the second motor, wherein the second inverter is included in the third path.

According to this configuration, the coolant that has passed through the radiator passes through the first motor before the second inverter. Thus, the first motor is preferentially cooled. Accordingly, deterioration of the traveling performance due to an increase in the temperature of the first motor can be prevented.

Furthermore, in the present invention, preferably, the first path has at least a portion located below the battery.

For example, in a configuration in which the battery is supported by a frame or the like, and the frame or the like is supported by the travel device, a space in which a member can be disposed may be present below the battery.

Here, according to this configuration, at least a portion of the first path is disposed in that space. As a result, the space can be effectively utilized.

Furthermore, in the present invention, preferably, the third path has at least a portion located on a left side or a right side of the battery.

According to this configuration, at least a portion of the third path can easily be supported (directly or indirectly) on a side wall of the battery. This facilitates stably supporting the third path.

Furthermore, in the present invention, preferably, the coolant circulates in a circulating direction that is changeable.

According to this configuration, it is possible to realize an electric tractor capable of switching between a state in which the first motor is cooled preferentially over the second motor and a state in which the second motor is cooled preferentially over the first motor.

A solving means corresponding to problem [2] is as follows.

The present invention is characterized by an electric tractor including: a battery; a first motor and a second motor configured to perform driving with use of electric power supplied from the battery; a travel device configured to be driven by the first motor; a transmission section configured to transmit driving force of the second motor to a work device; a hydraulic pump configured to be driven by the second motor; and a cooling path in which a coolant is circulatable, wherein the cooling path includes: a radiator configured to cool the coolant; a first path through which the coolant is flowable from the first motor toward the radiator; a second path through which the coolant is flowable from the second motor toward the first motor; and a third path through which the coolant is flowable from the radiator toward the second motor.

According to this configuration, the first motor, which is a power source of the travel device, and the second motor, which is a power source of the work device, are provided. This facilitates reliably obtaining power (horsepower) required to suitably drive the travel device and the work device compared to a case in which a single motor is used as a power source to drive the travel device and the work device.

Moreover, according to this configuration, the coolant that has passed through the radiator passes through the second motor before the first motor. Thus, the second motor is preferentially cooled. Accordingly, deterioration of the work performance due to an increase in the temperature of the second motor can be prevented.

That is, according to this configuration, it is possible to realize an electric tractor that is capable of suitably driving the travel device and the work device and has good work performance.

Furthermore, in the present invention, preferably, the electric tractor further includes a first inverter configured to convert DC power from the battery into AC power and supply the AC power to the first motor, wherein the first inverter is included in the first path.

According to this configuration, the coolant that has passed through the radiator passes through the second motor before the first inverter. Thus, the second motor is preferentially cooled. Accordingly, deterioration of the work performance due to an increase in the temperature of the second motor can be prevented.

Furthermore, in the present invention, preferably, the electric tractor further includes a second inverter configured to convert DC power from the battery into AC power and supply the AC power to the second motor, wherein the second inverter is included in the third path.

According to this configuration, the coolant that has passed through the radiator passes through the second inverter before the first motor. Thus, the second inverter is cooled preferentially. Accordingly, deterioration of the work performance due to an increase in the temperature of the second inverter can be prevented.

Furthermore, in the present invention, preferably, the first path has at least a portion located below the battery.

For example, in a configuration in which the battery is supported by a frame or the like, and the frame or the like is supported by the travel device, a space in which a member can be disposed may be present below the battery.

Here, according to this configuration, at least a portion of the first path is disposed in that space. As a result, the space can be effectively utilized.

Furthermore, in the present invention, preferably, the third path has at least a portion located on a left side or a right side of the battery.

According to the present configuration, at least a portion of the third path can easily be supported (directly or indirectly) on a side wall of the battery. As a result, the third path can easily be supported stably.

Furthermore, in the present invention, preferably, the coolant circulates in a circulating direction that is changeable.

According to this configuration, it is possible to realize an electric tractor capable of switching between a state in which the first motor is cooled preferentially over the second motor and a state in which the second motor is cooled preferentially over the first motor.

A solving means corresponding to problem [3] is as follows.

The present invention is characterized by an electric tractor including: a battery; a first motor configured to perform driving with use of electric power supplied from the battery; a travel device configured to be driven by the first motor; a first cooling path in which a first coolant is circulatable; and a second cooling path in which a second coolant is circulatable, wherein the first motor is included in the first cooling path, and the battery is included in the second cooling path.

According to this configuration, the first motor and the battery are included in different cooling paths. Thus, the coolant does not pass through one of the first motor and the battery after passing through the other. This makes it possible to realize an electric tractor in which the first motor and the battery are effectively cooled.

Furthermore, in the present invention, preferably, the first coolant and the second coolant are of different types.

According to this configuration, a coolant suitable for cooling the first motor can be employed as the first coolant, and a coolant suitable for cooling the battery can be employed as the second coolant. This makes it possible to realize an electric tractor in which the first motor and the battery are cooled more effectively.

Furthermore, in the present invention, preferably, the second coolant is an insulating oil.

According to this configuration, electrical interactions can be prevented from occurring between the battery and the second coolant.

Furthermore, in the present invention, preferably, the electric tractor further includes: a first radiator included in the first cooling path and configured to cool the first coolant; and a second radiator included in the second cooling path and configured to cool the second coolant.

According to this configuration, the first coolant and the second coolant can be reliably cooled. As a result, it is possible to realize an electric tractor in which the first motor and the battery are cooled more effectively.

Furthermore, in the present invention, preferably, the electric tractor further includes: a second motor configured to perform driving with use of electric power supplied from the battery; a transmission section configured to transmit driving force of the second motor to a work device; and a hydraulic pump configured to be driven by the second motor, wherein the second motor is included in the first cooling path.

According to this configuration, the first motor, which is a power source of the travel device, and the second motor, which is a power source of the work device, are provided. This facilitates reliably obtaining power (horsepower) required to suitably drive the travel device and the work device compared to a case in which a single motor is used as a power source to drive the travel device and the work device.

Moreover, according to this configuration, the first motor and the second motor are cooled by the first coolant. Accordingly, it is possible to avoid a situation in which the traveling performance and the work performance are degraded by an increase in the temperature of the first motor and the second motor.

That is, according to this configuration, it is possible to realize an electric tractor that is capable of suitably driving the travel device and the work device and favorably maintaining traveling performance and work performance.

### Brief Description of the Drawings

- FIG. 1: is a left side view of an electric tractor.
- FIG. 2: is a plan view showing a configuration of a front frame, a housing frame, and other components.
- FIG. 3: is a left side view showing a configuration of a first battery and other components.
- FIG. 4: is a right side view showing the configuration of the first battery and other components.
- FIG. 5: is a vertical front view showing the configuration of the first battery and other components.
- FIG. 6: is a left side view showing a configuration of a support mechanism.
- FIG. 7: is a right side view showing a configuration of the support mechanism.
- FIG. 8: is a plan view showing a configuration of the support mechanism.
- FIG. 9: is a left side view showing a configuration of a joint section and other components.
- FIG. 10: is a plan view showing configurations of a first battery support, a second battery support, and other components.
- FIG. 11: is a rear view showing a configuration of the first battery support, the second battery support, and other components.
- FIG. 12: is a diagram showing circulation paths of a first coolant and a second coolant.
- FIG. 13: is a diagram showing a configuration of a first cooling path, a second cooling path, and other components.
- FIG. 14: is a diagram showing circulation paths of the first coolant and the second coolant according to a first variation.

Best Mode for Carrying out the Invention

A mode for carrying out the present invention will be described with reference to the drawings. In the following description, unless otherwise stated, the direction of arrow F in the drawings is defined as "front", the direction of arrow B is defined as "rear", the direction of arrow L is defined as "left", and the direction of arrow R is defined as "right". The direction of the arrow U and the direction of the arrow D in the diagrams correspond to up and down, respectively.

### [Overall Configuration of Electric Tractor]

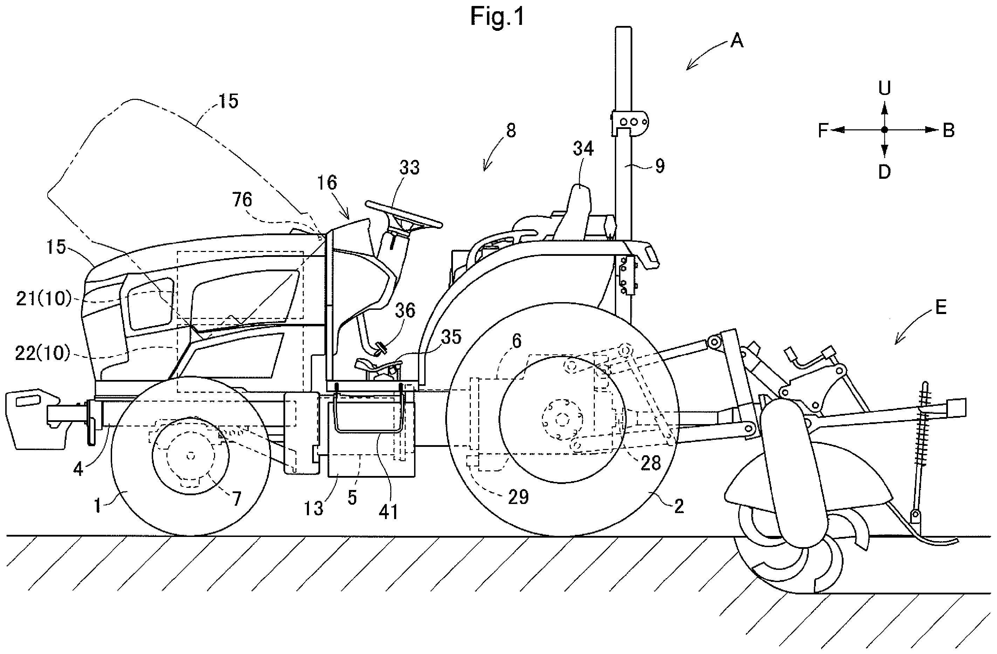

As shown in FIG. 1, an electric tractor A has left and right front wheels 1 (each corresponding to a "travel device" according to the present invention) at front portions of a vehicle body. The electric tractor A also has left and right rear wheels 2 (each corresponding to a "travel device" according to the present invention) at rear portions of the vehicle body. The vehicle body is supported by the front wheels 1 and the rear wheels 2.

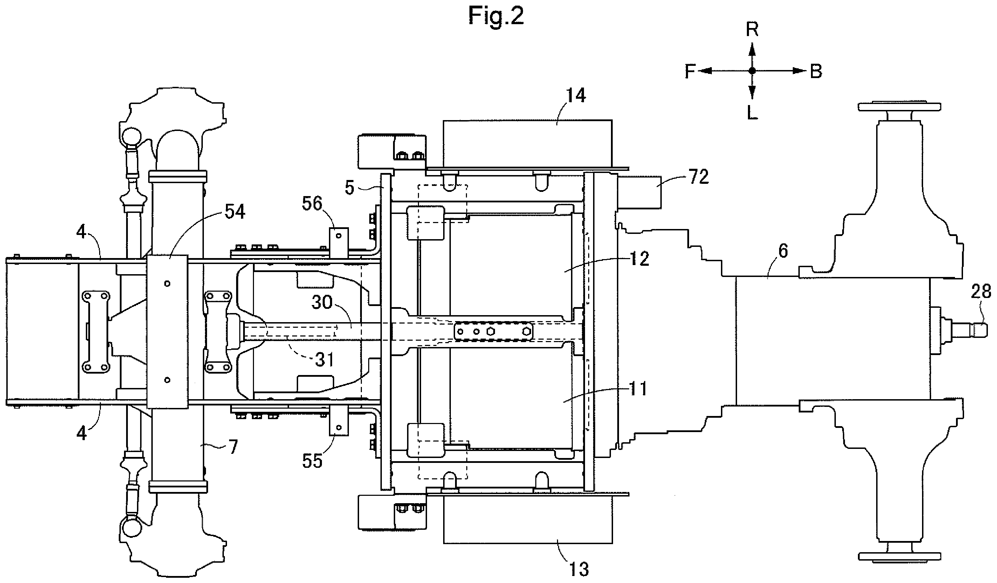

The electric tractor A includes left and right front frames 4, a housing frame 5, and a transmission case 6. As shown in FIGS. 1 and 2, the front frames 4 extend in a front-rear direction. Rear end portions of the front frames 4 are joined to a front portion of the housing frame 5. The transmis-sion case 6 is connected to a rear portion of the housing frame 5.

As shown in FIG. 2, a first motor 11 and a second motor 12 are housed in the housing frame 5. Note that both the first motor 11 and the second motor 12 are electric motors.

As shown in FIGS. 1 and 2, a front axle case 7 is attached to the front frames 4. The left and right front wheels 1 are attached to the front axle case 7. The left and right rear wheels 2 are attached to the transmission case 6.

An operator section 8 in which an operator can ride is provided above the housing frame 5 and the transmission case 6. That is, the electric tractor A includes the operator section 8 in which an operator can ride.

A ROPS frame 9 is attached to the transmission case 6 and extends upward. The ROPS frame 9 is provided rearward of the operator section 8. A plurality of first batteries 10 (each corresponding to a "battery" according to the present invention) are supported by the front frames 4.

The plurality of first batteries 10 are disposed at a front portion of the electric tractor A. Further, a hood 15 that covers the plurality of first batteries 10 is provided. Note that, although not specifically limited, the number of first batteries 10 is two in the present embodiment.

One or more air intake openings (not shown) are formed in a front portion of the hood 15. Traveling air (air) is introduced into the interior of the hood 15 through the air intake openings.

The first motor 11 and the second motor 12 are driven by electric power supplied from the plurality of first batteries 10. Note that, although not specifically limited, in the present embodiment, the plurality of first batteries 10 are electrically connected in series.

As described above, the electric tractor A includes the first batteries 10 disposed at the front portion of the vehicle body. More specifically, the electric tractor A includes the plurality of first batteries 10. Further specifically, the electric tractor A includes two first batteries 10. Moreover, the electric tractor A includes the first motor 11 and the second motor 12 that are driven by electric power supplied from the first batteries 10.

A first inverter 13 is attached to a left side portion of the housing frame 5. A second inverter 14 is attached to a right side portion of the housing frame 5. Electric power from the plurality of first batteries 10 is supplied to the first inverter 13. Based on an operation of a shift pedal 35 (see FIG. 1) of the operator section 8, DC power from the plurality of first batteries 10 is converted into AC power by the first inverter 13 and supplied to the first motor 11. The first motor 11 is thereby driven.

As described above, the electric tractor A includes the first inverter 13 that converts DC power from the first batteries 10 into AC power and supplies the AC power to the first motor 11.

Electric power from the plurality of first batteries 10 is supplied to the second inverter 14. DC power from the plurality of first batteries 10 is converted into AC power by the second inverter 14, and supplied to the second motor 12. The second motor 12 is thereby driven.

As described above, the electric tractor A includes the second inverter 14 that converts DC power from the first batteries 10 into AC power and supplies the AC power to the second motor 12.

Although not specifically limited, each of the first inverter 13 and the second inverter 14 may be housed in a case (not shown).

Note that the first batteries 10 are, for example, lithium-ion batteries. Although not shown, each first battery 10 includes low-voltage small unit cells and a storage case. A large number of unit cells are stacked in each first battery 10. The large number of unit cells are stored and sealed by the storage case. The output voltage of the first battery 10 is, for example, 400 volts.

A hydraulic multi-plate travel clutch (not shown), a transmission (not shown), and a rear wheel differential device (not shown), which constitute a power transmission mechanism, are provided inside the transmission case 6. The transmission is configured as a gear-type transmission and is capable of switching the gear shift state between two stages, namely a high-speed state and a low-speed state. Motive power of an output shaft (not shown) of the first motor 11 is transmitted to the travel clutch, transmitted from the travel clutch to the transmission, and transmitted from the transmission to the rear wheels 2 via the rear wheel differential device. Note that the output shaft of the first motor 11 extends rearward.

Inside the transmission case 6, motive power branched from between the transmission and the rear wheel differential device is transmitted to a later-described front wheel transmission shaft 31, transmitted from the front wheel transmission shaft 31 to a front wheel differential device (not shown) inside the front axle case 7, and transmitted from the front wheel differential device to the front wheels 1.

With the above-described configuration, the left and right front wheels 1 and the left and right rear wheels 2 are driven by the first motor 11. That is, the electric tractor A includes the left and right front wheels 1 and the left and right rear wheels 2 that are driven by the first motor 11.

A PTO shaft 28 (corresponding to a "transmission section" according to the present invention) is provided at a rear portion of the transmission case 6 and extends rearward. A mid PTO shaft 29 (corresponding to a "transmission section" according to the present invention) is provided at a bottom portion of the transmission case 6 and extends forward. A hydraulic multi-plate PTO clutch (not shown) and a PTO power transmission system (not shown), which constitute a power transmission mechanism, are provided inside the transmission case 6.

Motive power of an output shaft (not shown) of the second motor 12 is transmitted to the PTO clutch, transmitted from the PTO clutch to the PTO power transmission system, and transmitted from the PTO power transmission system to the PTO shaft 28 and the mid PTO shaft 29. Note that the output shaft of the second motor 12 extends rearward.

As shown in FIG. 1, in the case where a work device E is attached to a rear portion of the vehicle body, the motive power from the PTO shaft 28 is transmitted to the work device E. Thus, the PTO shaft 28 transmits the driving force of the second motor 12 to the work device E. Note that, in the example shown in FIG. 1, the work device E is a rotary tiller. However, the present invention is not limited thereto. The work device E attached to the rear portion of the vehicle body may be any device other than a rotary tiller.

Further, in the case where, for example, a work device E such as a mower (not shown) is attached to a lower portion of the vehicle body at a location between the front wheels 1 and the rear wheels 2 (i.e., a center portion of the vehicle body in the front-rear direction), the motive power from the mid PTO shaft 29 is transmitted to the work device E. However, the present invention is not limited thereto. The work device E attached to a center portion of the vehicle body in the front-rear direction may be any device other than a mower.

With the above-described configuration, the PTO shaft 28 and the mid PTO shaft 29 transmit the driving force of the second motor 12 to the work device E. That is, the electric tractor A includes the PTO shaft 28 and the mid PTO shaft 29 that transmit the driving force of the second motor 12 to the work device E.

The electric tractor A can travel while driving the work device E by simultaneously driving the first motor 11 and the second motor 12.

As shown in FIG. 2, a pipe member 30 spans between a rear portion of the housing frame 5 to the front axle case 7. The pipe member 30 extends along the front-rear direction. The aforementioned front wheel transmission shaft 31 is provided inside the pipe member 30. The front wheel transmission shaft 31 spans between the interior of the transmission case 6 to the front wheel differential device of the front axle case 7.

As shown in FIG. 1, the operator section 8 includes a steering wheel 33 for steering the front wheels 1, an operator seat 34, a shift pedal 35, a brake pedal 36, and the like. The operator can sit in the operator seat 34. A brake (not shown) capable of braking the left and right rear wheels 2 is activated in response to the operator operating the brake pedal 36. Thus, the left and right rear wheels 2 is subjected to a braking operation.

A step 41 for an operator to step on is attached to a lower left portion of the operator section 8. The operator uses this step 41 to board and deboard the operator section 8, mainly from the left side of the vehicle body.

### [Configuration of Interior of Hood]

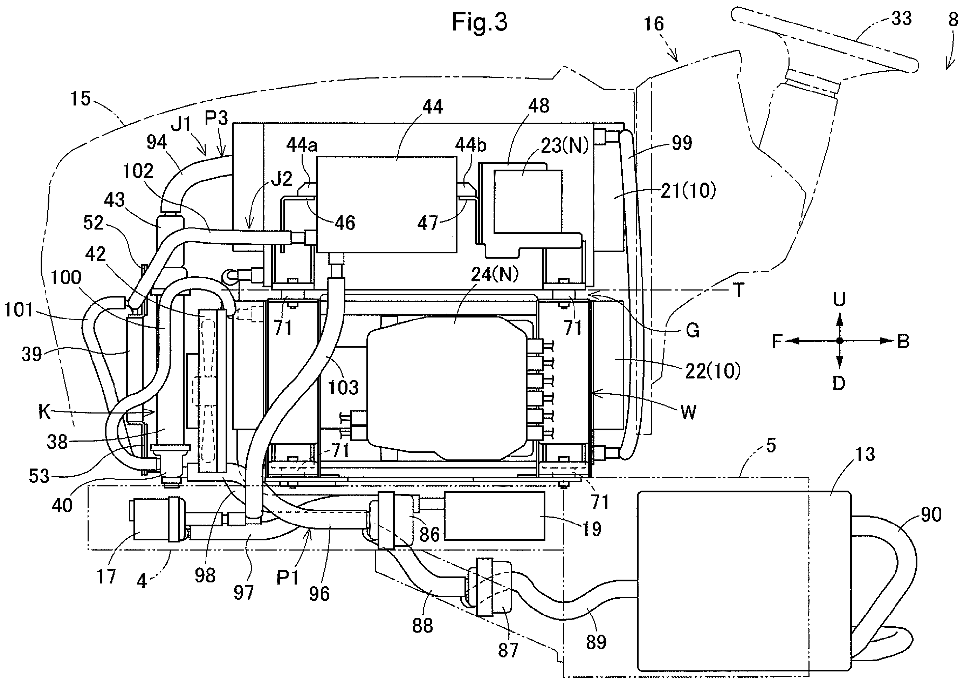

As shown in FIGS. 3 to 5, the electric tractor A includes an upper battery 21, a lower battery 22, a first radiator 38 (corresponding to a "radiator" according to the present invention), a second radiator 39, a third radiator 40, a cooling fan 42, a first reserve tank 43, and a second reserve tank 44.

The electric tractor A also includes a plurality of electrical components N. In the present embodiment, specifically, the plurality of electrical components N include a charging control device 23, a junction box 24, a first control unit 25, a second control unit 26, a second battery 27, and a voltage converter 37.

The upper battery 21, the lower battery 22, the charging control device 23, the junction box 24, the first control unit 25, the second control unit 26, the second battery 27, the voltage converter 37, the first radiator 38, the second radiator 39, the third radiator 40, the cooling fan 42, the first reserve tank 43, and the second reserve tank 44 are all covered (i.e., housed) by the hood 15.

Both the upper battery 21 and the lower battery 22 are the first batteries 10. That is, the electric tractor A includes the hood 15 that covers the first batteries 10. Although not specifically limited, specifications of the upper battery 21 and the lower battery 22 are identical to each other. In other words, the upper battery 21 and the lower battery 22 are batteries of the same type.

The upper battery 21 is disposed above the lower battery 22. Thus, the plurality of first batteries 10 are arranged in the up-down direction. More specifically, the two first batteries 10 are arranged in the up-down direction.

A lower surface of the upper battery 21 and an upper surface of the lower battery 22 are separated from each other. That is, a gap G is present between the upper battery 21 and the lower battery 22. In this manner, the gap G is present between the plurality of first batteries 10.

The electric tractor A also includes a charging socket (not shown). Each first battery 10 is charged in response to an operator or the like inserting an adapter of a charger into the charging socket. The charging socket receives electric power for charging each first battery 10. The standard for the charging socket may be, for example, CHAdeMO, CCS2, GB/T, ChaoJi, NACS, or the like.

The charging control device 23 may be a power module or a programmable logic controller (PLC) having a microcomputer that executes a program for charging each first battery 10, or may be a relay circuit that operates based on electrical signals. The charging control device 23 controls a charging voltage and a charging current for each first battery 10 when charging (including rapid charging) the first battery 10.

The junction box 24 is electrically connected to the first batteries 10, the first inverter 13, the second inverter 14, the voltage converter 37, and the charging socket. The junction box 24 functions as a hub that distributes electric power from the first batteries 10 to the first inverter 13, the second inverter 14, and the voltage converter 37. Further, the junction box 24 receives charging electric power from the charging socket and transmits the received charging electric power to the first batteries 10.

Both the first control unit 25 and the second control unit 26 are electronic control units (ECUs) that control respective parts of the electric tractor A. Although not specifically limited, for example, the first control unit 25 may be an ECU for controlling electric components (more specifically, e.g., the cooling fan 42, as well as a first pump 86 and a second pump 87, which will be described later, etc.), and the second control unit 26 may be an ECU for controlling the main body (more specifically, e.g., the first inverter 13, the second inverter 14, etc.).

The second battery 27 is a battery for auxiliary devices. The second battery 27 is, for example, a lead battery. The second battery 27 supplies low-voltage (e.g., 12-volt) electric power to drive the auxiliary devices (e.g., the cooling fan 42, and the later-described first pump 86 and second pump 87, etc.). The output voltage of the second battery 27 is lower than an output voltage of the first batteries 10. Note that the second battery 27 may also be capable of supplying electric power to the ECUs such as the first control unit 25 and the second control unit 26.

Further, electric power is supplied from the first batteries 10 to the voltage converter 37. The voltage converter 37 steps down the electric power from the first batteries 10 and supplies the resulting electric power to the second battery 27. The second battery 27 can thereby be charged.

As described above, the plurality of electrical components N include the second battery 27 for the auxiliary devices, the voltage converter 37 that steps down the electric power from the first batteries 10 and supplies the resulting electric power to the second battery 27, and the junction box 24.

The electric tractor A includes a first cooling path J1 (corresponding to a "cooling path" according to the present invention) and a second cooling path J2 in which a coolant circulates. A first coolant (corresponding to a "coolant" according to the present invention) circulates in the first cooling path J1. A second coolant circulates in the second cooling path J2. That is, the electric tractor A includes the first cooling path J1 in which the first coolant circulates, and the second cooling path J2 in which the second coolant circulates.

Although not specifically limited, the first coolant and the second coolant are different types of coolant in the present embodiment. Specifically, the first coolant is a known long-life coolant (LLC). The second coolant is an insulating oil.

The first radiator 38 is included in the first cooling path J1. The first radiator 38 cools the first coolant. That is, the electric tractor A includes the first radiator 38 that is included in the first cooling path J1 and cools the first coolant.

The second radiator 39 is included in the second cooling path J2. The second radiator 39 cools the second coolant. That is, the electric tractor A includes the second radiator 39 that is included in the second cooling path J2 and cools the second coolant.

The third radiator 40 is included in the second cooling path J2. The third radiator 40 cools the second coolant.

The third radiator 40 is disposed below the first radiator 38. The first radiator 38 and the third radiator 40 constitute a radiator device K. The second radiator 39 is disposed forward of the radiator device K.

The cooling fan 42 is disposed rearward of the first radiator 38, the second radiator 39, and the third radiator 40. The cooling fan 42 sends cooling air rearward. Thus, outside air is introduced into the interior of the hood 15 through the aforementioned air intake openings and passes through the first radiator 38, the second radiator 39, and the third radiator 40. As a result, the first radiator 38, the second radiator 39, and the third radiator 40 are cooled.

Note that the cooling fan 42 is disposed on the front side of the upper battery 21 and the lower battery 22. Further, the cooling fan 42 is disposed forward of the lower battery 22.

The first reserve tank 43 is included in the first cooling path J1. The first reserve tank 43 is capable of storing the first coolant.

The second reserve tank 44 is included in the second cooling path J2. The second reserve tank 44 is capable of storing the second coolant.

As shown in FIGS. 3 to 5, the charging control device 23 and the junction box 24 are disposed on the left side of the first batteries 10. The first control unit 25, the second control unit 26, the second battery 27, and the voltage converter 37 are disposed on the right side of the first batteries 10. That is, the plurality of electrical components N are disposed in a distributed manner on the left and right sides of the first batteries 10. The voltage converter 37 and the junction box 24 are also disposed in a distributed manner on the left and right sides of the first batteries 10.

FIGS. 3 to 5 show a reference position T. The reference position T is a lower end position of the upper battery 21. The charging control device 23, the second reserve tank 44, the first control unit 25, the second control unit 26, and the second battery 27 are all disposed above the reference position T. The voltage converter 37 and the junction box 24 are both disposed below the reference position T.

In this manner, the plurality of electrical components N are disposed in a distributed manner above and below the lower end position of the upper first battery 10. Further, the voltage converter 37 and the junction box 24 are both disposed below the lower end position of the upper first battery 10.

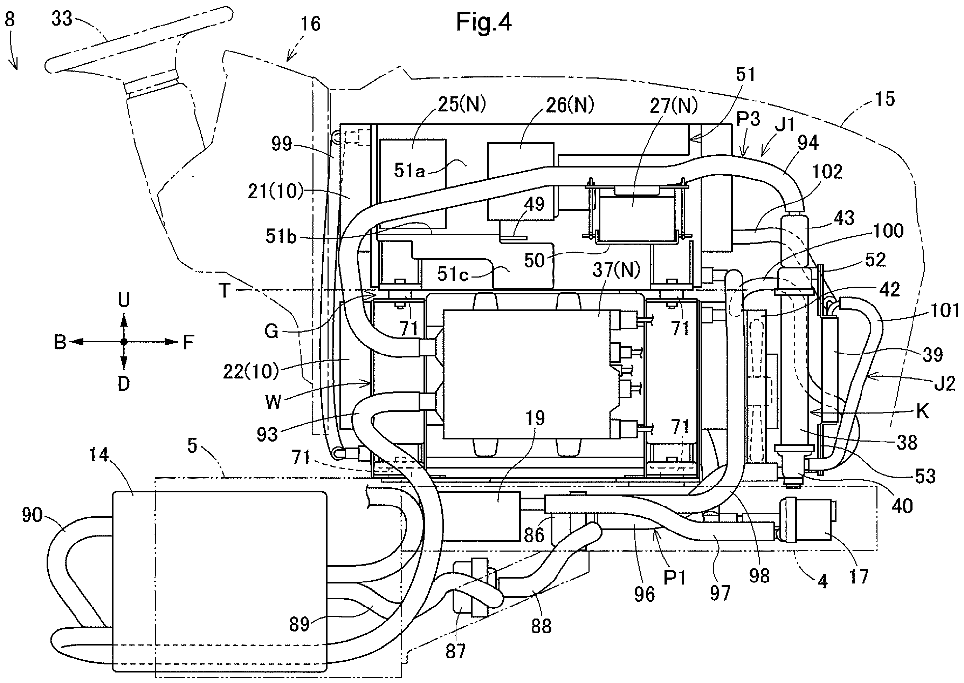

As shown in FIG. 3, the second reserve tank 44 is located forward of the charging control device 23. As shown in FIG. 4, the second control unit 26 is located forward of the first control unit 25. Further, the second battery 27 is located forward of the second control unit 26.

### [Support Structure of Members Inside Hood]

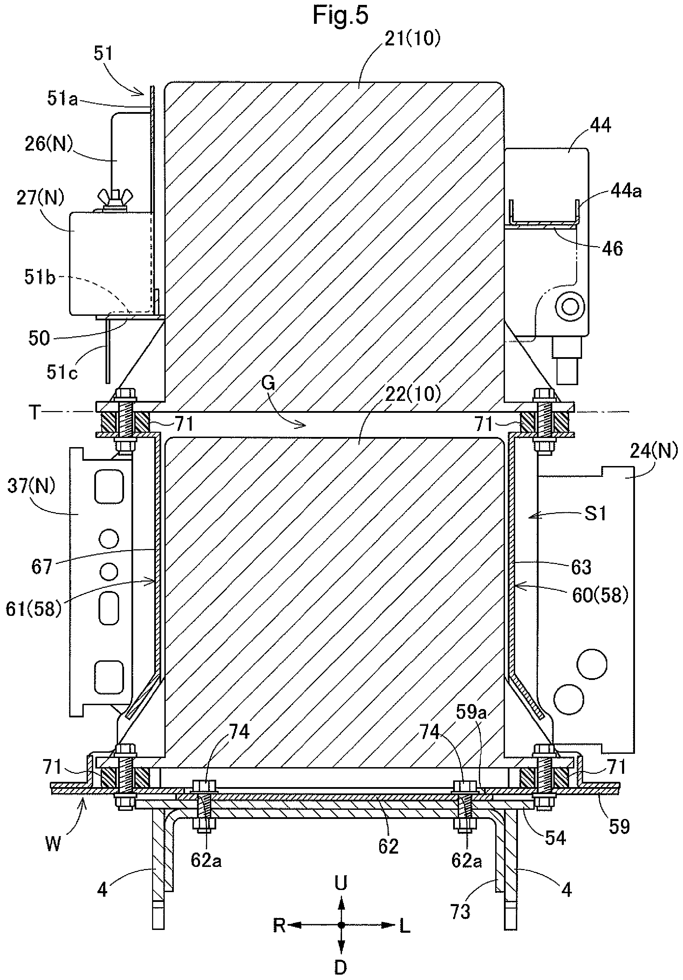

As shown in FIGS. 3 and 5, a first support stay 46 and a second support stay 47 are provided on a left side wall of the upper battery 21. Note that the first support stay 46 and the second support stay 47 may be portions of the upper battery 21, but need not necessarily be included in the upper battery 21.

The second support stay 47 is disposed rearward of the first support stay 46. The second reserve tank 44 is provided with a front support 44a extending forward at its front end portion. The second reserve tank 44 is also provided with a rear support 44b extending rearward at its rear end portion.

The front support 44a is in contact with the first support stay 46 from above and supported by the first support stay 46. The rear support 44b is in contact with the second support stay 47 from above and supported by the second support stay 47. Thus, the second reserve tank 44 is supported on the left side wall of the upper battery 21 via the first support stay 46 and the second support stay 47.

A first plate-shaped member 48 is attached to the second support stay 47, for example, by welding, bolting, or the like. The first plate-shaped member 48 is disposed rearward of the second support stay 47. Further, the first plate-shaped member 48 is disposed facing the left side wall of the upper battery 21.

The charging control device 23 is in contact with the first plate-shaped member 48 from the left side and supported by the first plate-shaped member 48. The charging control device 23 may be fixed to the first plate-shaped member 48, for example, by bolting or the like.

As shown in FIGS. 4 and 5, a third support stay 49 and a fourth support stay 50 are provided on a right side wall of the upper battery 21. Note that the third support stay 49 and the fourth support stay 50 may be portions of the upper battery 21, but need not necessarily be included in the upper battery 21.

As shown in FIGS. 4 and 5, the electric tractor A includes a second plate-shaped member 51.

The second plate-shaped member 51 includes an upper portion 51a, a horizontal portion 51b, and a lower portion 51c. The upper portion 51a and the lower portion 51c are both in a vertical orientation and face the right side wall of the upper battery 21. The horizontal portion 51b is in a horizontal orientation.

A lower end portion of the upper portion 51a is connected to a left end portion of the horizontal portion 51b. An upper end portion of the lower portion 51c is connected to a right end portion of the horizontal portion 51b.

The horizontal portion 51b is in contact with the third support stay 49 from above and supported by the third support stay 49. Thus, the second plate-shaped member 51 is supported by the third support stay 49. Note that the second plate-shaped member 51 may be fixed to the third support stay 49, for example, by bolting or the like.

The first control unit 25 and the second control unit 26 are in contact with the upper portion 51a from the right side and supported by the upper portion 51a. The first control unit 25 and the second control unit 26 may be fixed to the upper portion 51a, for example, by bolting or the like.

Thus, the first control unit 25 and the second control unit 26 are supported on the right side wall of the upper battery 21 via the second plate-shaped member 51 and the third support stay 49.

As shown in FIGS. 4 and 5, the second battery 27 is in contact with the fourth support stay 50 from above and supported by the fourth support stay 50. Thus, the second battery 27 is supported on the right side wall of the upper battery 21 via the fourth support stay 50.

As shown in FIGS. 3 to 5, the electric tractor A includes a support mechanism W. The support mechanism W is supported by the left and right front frames 4. The voltage converter 37 and the junction box 24 are both supported by the support mechanism W.

As shown in FIGS. 3 and 4, the cooling fan 42 and the radiator device K are supported by the left and right front frames 4.

An upper support member 52 spans between an upper end portion of the radiator device K and an upper end portion of the second radiator 39. A lower support member 53 spans between a lower end portion of the radiator device K and a lower end portion of the second radiator 39. The second radiator 39 is supported by the upper support member 52 and the lower support member 53. Thus, the second radiator 39 is supported by the radiator device K via the upper support member 52 and the lower support member 53.

The first reserve tank 43 is in contact with the radiator device K from above and supported by the radiator device K.

### [Configuration of Support Mechanism]

As shown in FIG. 2, the electric tractor A includes a third plate-shaped member 54, a fifth support stay 55, and a sixth support stay 56.

The third plate-shaped member 54 is a plate-shaped member in a horizontal orientation. The third plate-shaped member 54 spans between the left front frame 4 and the right front frame 4. As shown in FIG. 5, the third plate-shaped member 54 is in contact with the left and right front frames 4 from above and supported by the left and right front frames 4.

As shown in FIG. 5, the electric tractor A includes a channel-shaped reinforcing frame 73. The reinforcing frame 73 is sandwiched between the left and right front frames 4 and fixed to the left and right front frames 4, for example, by welding or the like. The reinforcing frame 73 is also in contact with the third plate-shaped member 54 from below. The reinforcing frame 73 is fixed to the third plate-shaped member 54, for example by welding or the like.

The fifth support stay 55 and the sixth support stay 56 shown in FIG. 2 are both plate-shaped members bent into an L shape. The fifth support stay 55 is attached to the left front frame 4. The sixth support stay 56 is attached to the right front frame 4. The fifth support stay 55 and the sixth support stay 56 are disposed on the rear side of the third plate-shaped member 54.

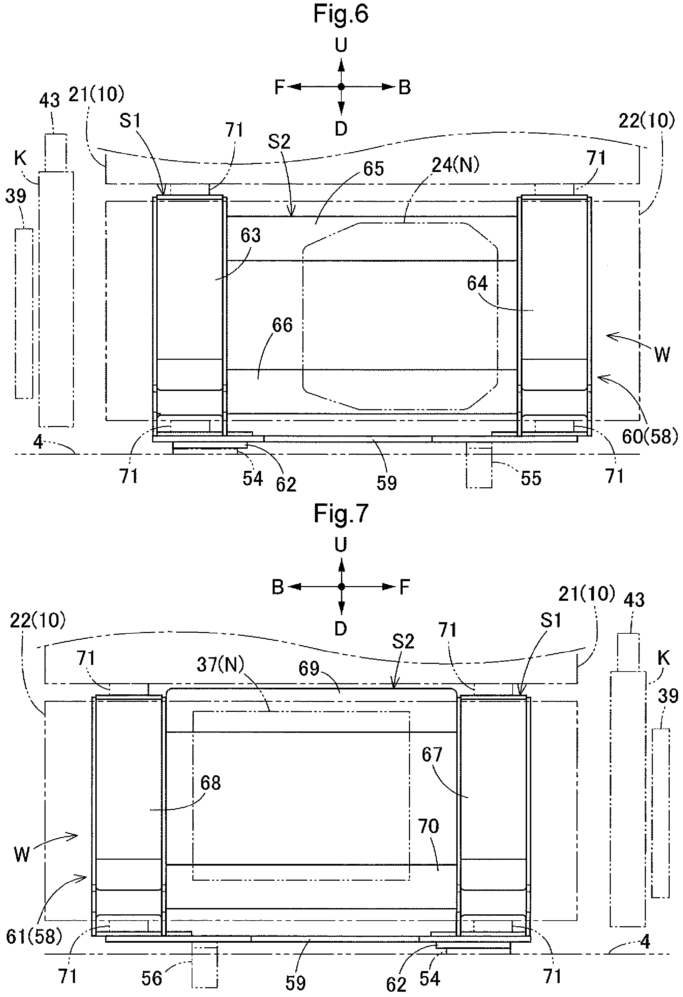

As shown in FIGS. 6 to 8, the support mechanism W is constituted by left and right support frames 58, a bottom plate 59, and a fourth plate-shaped member 62. That is, the support mechanism W has the left and right support frames 58.

The left and right support frames 58 include a left support frame 60 and a right support frame 61. The left support frame 60 is the support frame 58 on the left side. The right support frame 61 is the support frame 58 on the right side.

The left support frame 60 is disposed along a left side wall of the lower battery 22. The right support frame 61 is disposed along a right side wall of the lower battery 22. That is, the support frames 58 are disposed along the respective side walls of the lower battery 22. The lower battery 22 is disposed at a position sandwiched between the left and right support frames 58.

The bottom plate 59 is a plate-shaped member in a horizontal orientation. The left and right support frames 58 are in contact with the bottom plate 59 from above and supported by the bottom plate 59. The left and right support frames 58 are attached to the bottom plate 59 by, for example, welding, bolting, or the like.

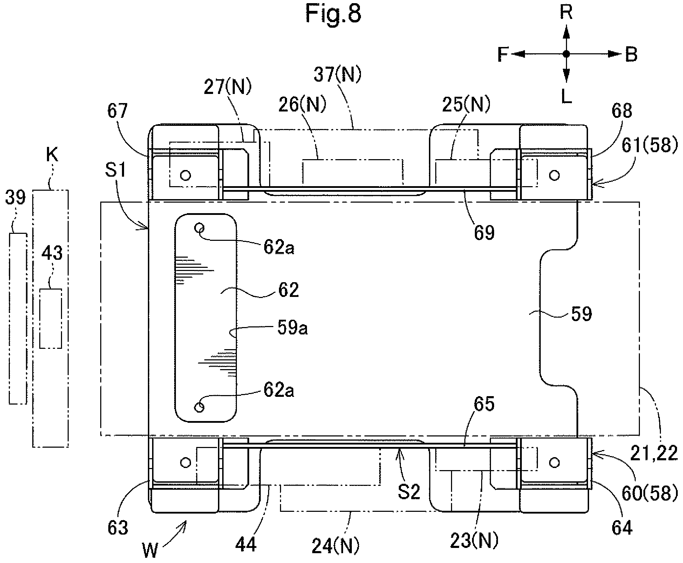

As shown in FIGS. 5 and 8, the bottom plate 59 has a hole 59a at its front portion. The fourth plate-shaped member 62 is a plate-shaped member in a horizontal orientation. The fourth plate-shaped member 62 is attached to a bottom surface of the bottom plate 59 to cover the hole 59a from below, for example, by welding, bolting, or the like.

As shown in FIGS. 6 and 7, the fourth plate-shaped member 62 is in contact with the third plate-shaped member 54 from above and supported by the third plate-shaped member 54. Thus, a front portion of the support mechanism W is supported by the left and right front frames 4 via the third plate-shaped member 54.

As shown in FIG. 5, the fourth plate-shaped member 62, the third plate-shaped member 54, and the reinforcing frame 73 are fastened together by fixing bolts 74. The fourth plate-shaped member 62 has bolt holes 62a. The fixing bolts 74 are inserted into the bolt holes 62a. Note that any number of fixing bolts 74 and bolt holes 62a may be provided.

As shown in FIG. 8, the bolt holes 62a are provided within the hole 59a (i.e., at positions corresponding to the hole 59a) in a plan view.

As shown in FIGS. 6 and 7, a rear portion of the support mechanism W is in contact with the fifth support stay 55 and the sixth support stay 56 from above and supported by the fifth support stay 55 and the sixth support stay 56. Thus, the rear portion of the support mechanism W is supported by the left and right front frames 4 via the fifth support stay 55 and the sixth support stay 56.

As shown in FIGS. 6 and 8, the left support frame 60 includes a first column frame 63, a second column frame 64, a first joint frame 65, and a second joint frame 66. The first column frame 63 and the second column frame 64 both extend in the up-down direction. Lower end portions of the first column frame 63 and the second column frame 64 are attached to an upper surface of the bottom plate 59, for example, by welding, bolting, or the like. The first column frame 63 is disposed on the front side of the second column frame 64.

The first joint frame 65 and the second joint frame 66 both extend in the front-rear direction. The first joint frame 65 is disposed above the second joint frame 66. A front end portion of the first joint frame 65 is joined to an upper portion of the first column frame 63. A rear end portion of the first joint frame 65 is joined to an upper portion of the second column frame 64. A front end portion of the second joint frame 66 is joined to a lower portion of the first column frame 63. A rear end portion of the second joint frame 66 is joined to a lower portion of the second column frame 64. Note that the first joint frame 65 and the second joint frame 66 are separated from each other in the up-down direction.

As shown in FIGS. 7 and 8, the right support frame 61 includes a third column frame 67, a fourth column frame 68, a third joint frame 69, and a fourth joint frame 70. The third column frame 67 and the fourth column frame 68 both extend in the up-down direction. Lower end portions of the third column frame 67 and the fourth column frame 68 are attached to an upper surface of the bottom plate 59, for example, by welding, bolting, or the like. The third column frame 67 is disposed on the front side of the fourth column frame 68.

The third joint frame 69 and the fourth joint frame 70 both extend in the front-rear direction. The third joint frame 69 is disposed above the fourth joint frame 70. A front end portion of the third joint frame 69 is joined to an upper portion of the third column frame 67. A rear end portion of the third joint frame 69 is joined to an upper portion of the fourth column frame 68. A front end portion of the fourth joint frame 70 is joined to a lower portion of the third column frame 67. A rear end portion of the fourth joint frame 70 is joined to a lower portion of the fourth column frame 68. Note that the third joint frame 69 and the fourth joint frame 70 are separated from each other in the up-down direction.

As shown in FIGS. 6 to 8, the bottom plate 59, the first column frame 63, the second column frame 64, the third column frame 67, and the fourth column frame 68 constitute a first support S1. The first support S1 supports the upper battery 21 and the lower battery 22. That is, the first support S1 supports the plurality of first batteries 10.

Specifically, as shown in FIGS. 5 to 7, a left front portion of the upper battery 21 is supported by an upper end portion of the first column frame 63 of the first support S1 via a first elastic member 71. A right front portion of the upper battery 21 is supported by an upper end portion of the third column frame 67 of the first support S1 via the first elastic member 71. A left rear portion of the upper battery 21 is supported by an upper end portion of the second column frame 64 of the first support S1 via the first elastic member 71. A right rear portion of the upper battery 21 is supported by an upper end portion of the fourth column frame 68 of the first support S1 via the first elastic member 71.

A left front portion of the lower battery 22 is supported by a left front portion of the bottom plate 59 of the first support S1 via the first elastic member 71. A right front portion of the lower battery 22 is supported by a right front portion of the bottom plate 59 of the first support S1 via the first elastic member 71. A left rear portion of the lower battery 22 is supported by a left rear portion of the bottom plate 59 of the first support S1 via the first elastic member 71. A right rear portion of the lower battery 22 is supported by a right rear portion of the bottom plate 59 of the first support S1 via the first elastic member 71.

Note that the first elastic member 71 is not specifically limited, but may be, for example, a rubber mount.

As shown in FIGS. 6 to 8, the first joint frame 65, the second joint frame 66, the third joint frame 69, and the fourth joint frame 70 constitute a second support S2. The second support S2 supports the electrical components N (more specifically, the junction box 24 and the voltage converter 37). That is, the electric tractor A includes the support mechanism W having the first support S1 and the second support S2.

Specifically, the junction box 24 is in contact with the first joint frame 65 and the second joint frame 66 of the second support S2 from the left side and supported by the first joint frame 65 and the second joint frame 66. The junction box 24 is attached to the first joint frame 65 and the second joint frame 66, for example, by bolting or the like.

The voltage converter 37 is in contact with the third joint frame 69 and the fourth joint frame 70 of the second support S2 from the right side and supported by the third joint frame 69 and the fourth joint frame 70. The voltage converter 37 is attached to the third joint frame 69 and the fourth joint frame 70, for example, by bolting or the like.

### [Hydraulic Pump]

As shown in FIG. 2, the electric tractor A includes a hydraulic pump 72. The hydraulic pump 72 is attached to a right rear portion of the housing frame 5. Motive power from an output shaft (not shown) of the second motor 12 is transmitted to a power transmission gear (not shown), and is transmitted from the power transmission gear to an input shaft (not shown) of the hydraulic pump 72. The motive power from the second motor 12 is thereby transmitted to the hydraulic pump 72. As a result, the hydraulic pump 72 is driven.

In this manner, the electric tractor A includes the hydraulic pump 72 driven by the second motor 12.

Note that the aforementioned power transmission gear is housed in a rear portion of the housing frame 5. The input shaft of the hydraulic pump 72 extends forward.

The hydraulic pump 72 supplies hydraulic oil to various parts of the electric tractor A. For example, in the case where a front loader device (not shown) is attached to the vehicle body, hydraulic oil is supplied from the hydraulic pump 72 to the front loader device, whereby the front loader device operates. Further, hydraulic oil is supplied from the hydraulic pump 72 to various hydraulic devices (not shown) in the vehicle body, whereby the hydraulic devices operate.

### [Pillar Frame]

As shown in FIGS. 1 to 3, a steering wheel support mechanism 16 is provided at a front end portion of the operator section 8. The steering wheel 33 is supported by the steering wheel support mechanism 16.

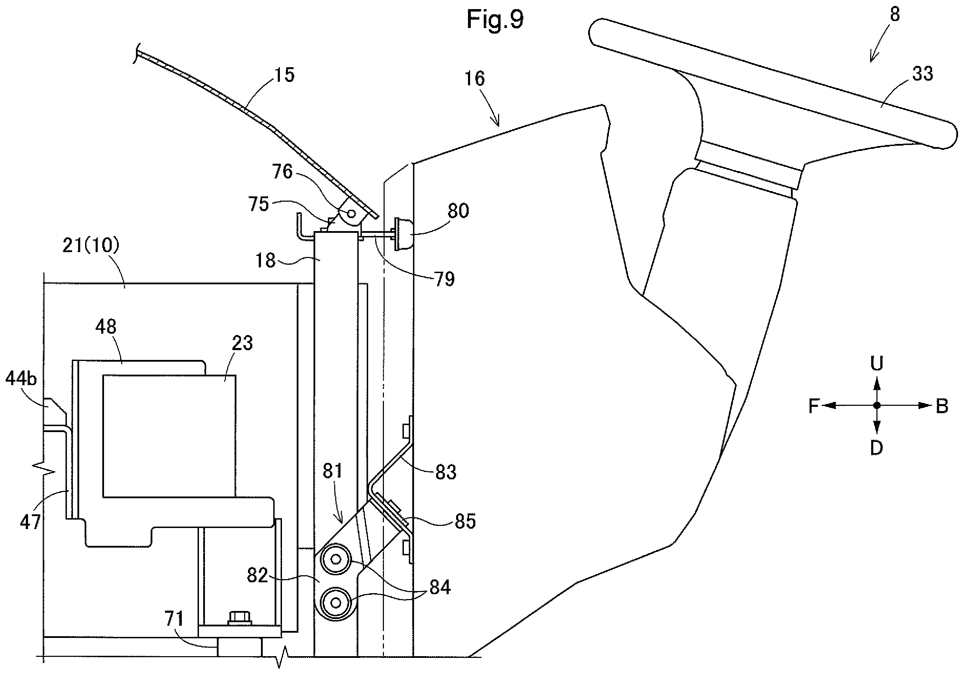

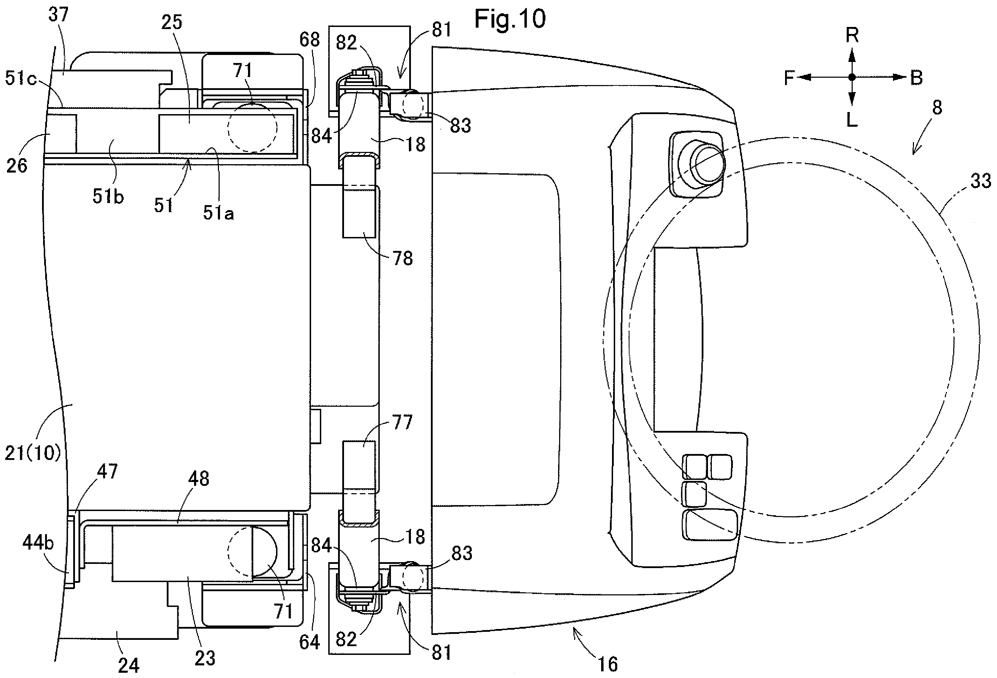

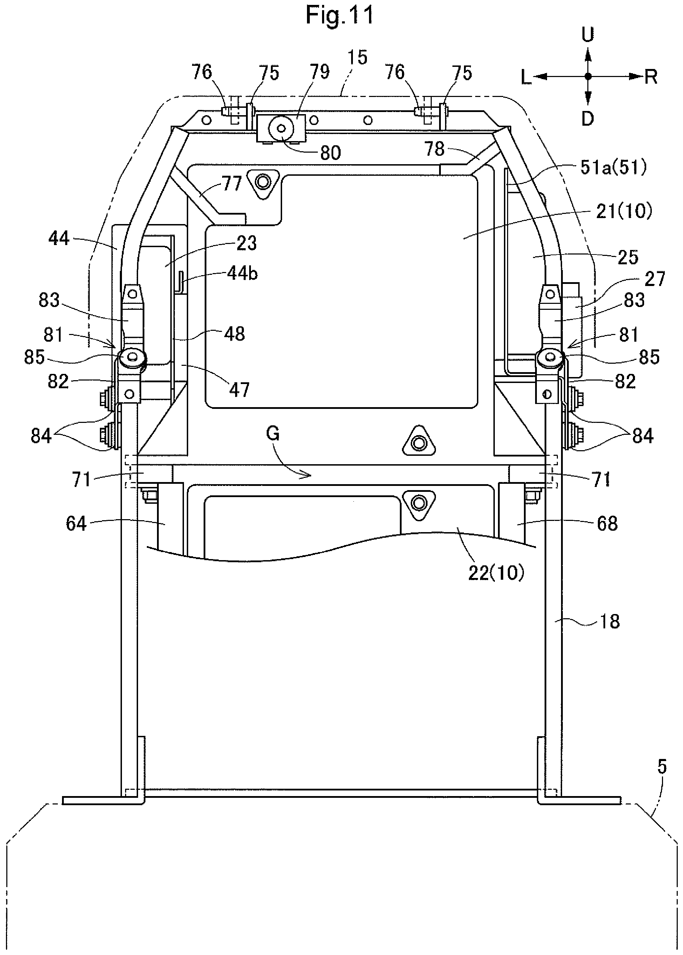

As shown in FIGS. 9 and 10, a pillar frame 18 is provided forward of the steering wheel support mechanism 16. As shown in FIG. 11, the pillar frame 18 is formed in an arch shape (gate shape) in a rear view. The pillar frame 18 is in contact with the housing frame 5 from above and supported by the housing frame 5.

As shown in FIGS. 9 and 11, the electric tractor A includes a shaft support 75 and a shaft member 76. The shaft support 75 is fixed to an upper end portion of the pillar frame 18. The shaft support 75 extends upward from the upper end portion of the pillar frame 18.

The shaft member 76 extends in the left-right direction of the vehicle body. The shaft member 76 is supported by the shaft support 75. Thus, the shaft member 76 is supported by the pillar frame 18 via the shaft support 75. That is, the shaft member 76 is supported by the pillar frame 18. Note that any number of shaft supports 75 and shaft members 76 may be provided.

As shown in FIGS. 1, 9, and 11, the hood 15 is supported by the shaft member 76 so as to be pivotable up and down about the shaft member 76. Thus, the hood 15 is supported by the pillar frame 18 via the shaft member 76 and the shaft support 75. Further, the hood 15 can thereby be opened and closed.

That is, the electric tractor A includes the pillar frame 18 that supports the hood 15. The hood 15 can be opened and closed by being pivoted up and down about the shaft member 76, which extends in the left-right direction of the vehicle body.

As shown in FIGS. 10 and 11, the electric tractor A includes a first battery support 77 and a second battery support 78. The first battery support 77 spans between an upper left portion of the pillar frame 18 and an upper left portion of the upper battery 21. A left end portion of the first battery support 77 is fixed to the upper left portion of the pillar frame 18, for example, by welding or the like. A right end portion of the first battery support 77 is fixed to the upper left portion of the upper battery 21, for example, by bolting or the like.

The second battery support 78 spans between an upper right portion of the pillar frame 18 and an upper right portion of the upper battery 21. A right end portion of the second battery support 78 is fixed to the upper right portion of the pillar frame 18, for example, by welding or the like. A left end portion of the second battery support 78 is fixed to the upper right portion of the upper battery 21, for example, by bolting or the like.

With this configuration, the upper battery 21 is supported by the pillar frame 18 via the first battery support 77 and the second battery support 78. That is, the upper battery 21 is supported by the pillar frame 18.

As shown in FIGS. 9 and 11, the electric tractor A includes a seventh support stay 79 and a second elastic member 80. The seventh support stay 79 is fixed to an upper end portion of the pillar frame 18. The seventh support stay 79 extends rearward from the upper end portion of the pillar frame 18. The second elastic member 80 is attached to a rear end portion of the seventh support stay 79. Although not specifically limited, the second elastic member 80 may be made of, for example, rubber.

As shown in FIG. 9, the second elastic member 80 is in contact with a front end portion (more specifically, a front wall) of the steering wheel support mechanism 16. When the hood 15 is opened and closed, the second elastic member 80 suppresses vibrations of the hood 15 and the pillar frame 18 caused by the opening and closing of the hood 15.

As shown in FIGS. 9 to 11, the electric tractor A includes left and right joint sections 81. Each joint section 81 spans between the pillar frame 18 and a front end portion of the steering wheel support mechanism 16. That is, the electric tractor A includes the joint sections 81 spanning between the pillar frame 18 and the operator section 8.

Each joint section 81 includes a first joint 82, a second joint 83, a third elastic member 84, and a fourth elastic member 85. Although not specifically limited, the third elastic member 84 and the fourth elastic member 85 may be made of, for example, rubber.

The first joint 82 is attached to the pillar frame 18 via the third elastic member 84. The first joint 82 extends rearward from the pillar frame 18.

The second joint 83 is attached to a rear end portion of the first joint 82 via the fourth elastic member 85. The second joint 83 is joined to the front end portion (more specifically, the front wall) of the steering wheel support mechanism 16, for example, by welding, bolting, or the like.

With the above-described configuration, the pillar frame 18 is joined to the operator section 8 via the left and right joint sections 81. Note that the present invention is not limited thereto, and any number of joint sections 81 may be provided.

Vibrations may occur in the operator section 8 in response to an operator boarding and deboard-ing the operator section 8. The fourth elastic member 85 suppresses the case where vibrations transmitted from the operator section 8 to the second joint 83 are further transmitted from the second joint 83 to the first joint 82. As a result, the transmission of vibrations from the operator section 8 to the pillar frame 18 is suppressed.

The third elastic member 84 suppresses the case where vibrations transmitted from the operator section 8 to the first joint 82 via the second joint 83 are transmitted from the first joint 82 to the pillar frame 18. As a result, the transmission of vibrations from the operator section 8 to the pillar frame 18 is suppressed.

In this manner, each joint section 81 includes the third elastic member 84 and the fourth elastic member 85 that suppress the transmission of vibrations from the operator section 8 to the pillar frame 18.

### [First Cooling Path]

As shown in FIGS. 3 and 4, the electric tractor A includes the first pump 86 and the second pump 87. The first pump 86 and the second pump 87 are both disposed below the lower battery 22.

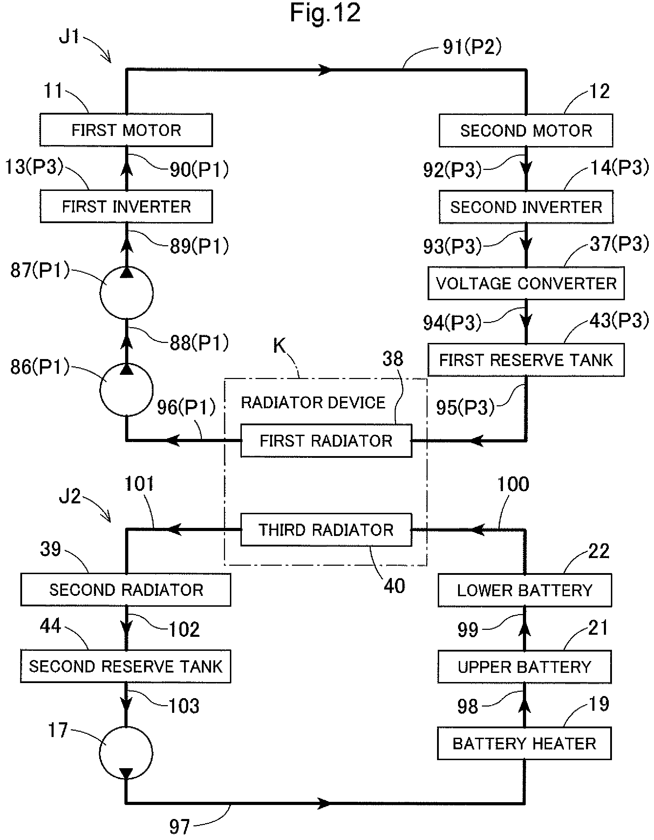

As shown in FIG. 12, the first pump 86 and the second pump 87 are included in the first cooling path J1. The first pump 86 and the second pump 87 may be configured to be driven, for example, by electric power supplied from the second battery 27. The first pump 86 and the second pump 87 pump the first coolant.

The first cooling path J1 includes the first inverter 13, the first motor 11, the second motor 12, the second inverter 14, the voltage converter 37, the first reserve tank 43, and the first radiator 38.

That is, the voltage converter 37 is included in the first cooling path J1. The first motor 11 is also included in the first cooling path J1. The second motor 12 is also included in the first cooling path J1.

Further, the first cooling path J1 includes a first path P1, a second path P2, and a third path P3. The first path P1 connects the first radiator 38 and the first motor 11. In the first path P1, the first coolant flows from the first radiator 38 toward the first motor 11.

The second path P2 connects the first motor 11 and the second motor 12. In the second path P2, the first coolant flows from the first motor 11 toward the second motor 12.

The third path P3 connects the second motor 12 and the first radiator 38. In the third path P3, the first coolant flows from the second motor 12 toward the first radiator 38.

That is, the first cooling path J1 includes the first radiator 38 that cools the first coolant, the first path P1 through which the first coolant flows from the first radiator 38 toward the first motor 11, the second path P2 through which the first coolant flows from the first motor 11 toward the second motor 12, and the third path P3 through which the first coolant flows from the second motor 12 toward the first radiator 38.

The first path P1 will be described in detail. The first path P1 includes a first hose 96, the first pump 86, a second hose 88, the second pump 87, a third hose 89, the first inverter 13, and a fourth hose 90. That is, the first inverter 13 is included in the first path P1.

The first hose 96 connects the first radiator 38 and the first pump 86. The second hose 88 connects the first pump 86 and the second pump 87. The third hose 89 connects the second pump 87 and the first inverter 13. The fourth hose 90 connects the first inverter 13 and the first motor 11.

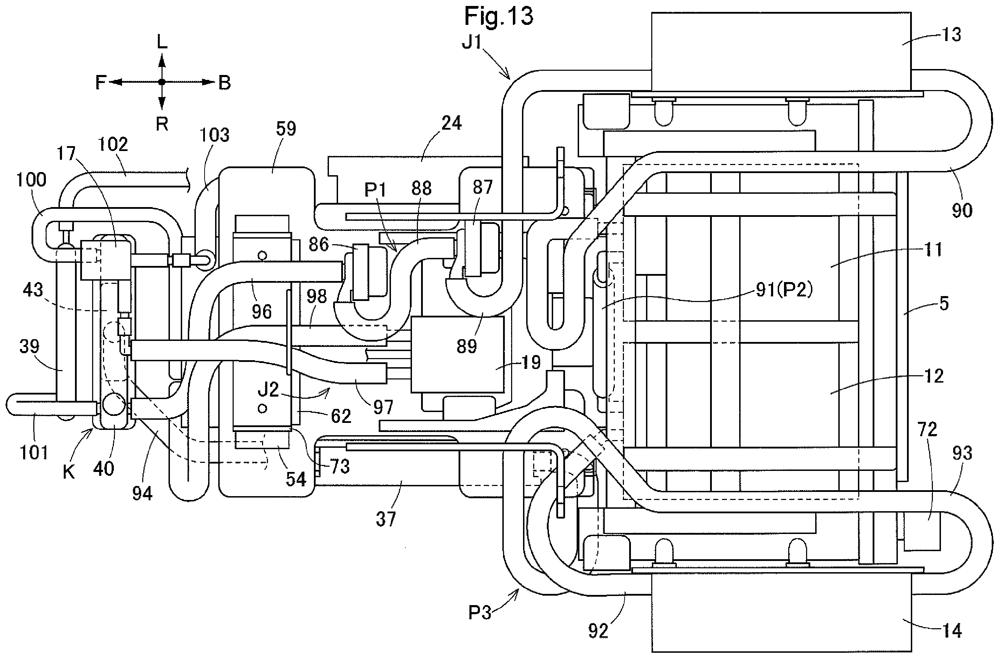

As shown in FIGS. 3, 4, and 13, a portion of the first hose 96 and a portion of the third hose 89 are located below the upper battery 21 and the lower battery 22. Further, the first pump 86, the second hose 88, and the second pump 87 are located below the upper battery 21 and the lower battery 22. In this manner, at least a portion of the first path P1 is located below the first battery 10. Note that only a portion of the first path P1 may be located below the first battery 10, or the entire first path P1 may be located below the first battery 10.

The second path P2 will be described in detail. As shown in FIG. 12, the second path P2 is constituted by a fifth hose 91. The fifth hose 91 connects the first motor 11 and the second motor 12.

The third path P3 will be described in detail. The third path P3 includes a sixth hose 92, the second inverter 14, a seventh hose 93, the voltage converter 37, an eighth hose 94, the first reserve tank 43, and a ninth hose 95. That is, the second inverter 14 is included in the third path P3.

As shown in FIGS. 3, 4, and 13, a portion of the seventh hose 93 and a portion of the eighth hose 94 are located to the right of the lower battery 22. Further, a portion of the eighth hose 94 is located to the right of the upper battery 21. The voltage converter 37 is located to the right of the lower battery 22.

Thus, at least a portion of the third path P3 is located to the right of the first battery 10. Note that the present invention is not limited thereto. For example, the arrangement of the seventh hose 93, the eighth hose 94, and the voltage converter 37 may be reversed in the left-right direction. That is, at least a portion of the third path P3 is located to the left or right of the first battery 10. Note that only a portion of the third path P3 may be located to the left or right of the first battery 10, or the entire third path P3 may be located to the left or right of the first battery 10.

As shown in FIG. 12, the first pump 86 and the second pump 87 are connected in series by the second hose 88. The first coolant pumped by the first pump 86 and the second pump 87 flows through the third hose 89, the first inverter 13, the fourth hose 90, the first motor 11, the fifth hose 91, the second motor 12, the sixth hose 92, the second inverter 14, the seventh hose 93, the voltage converter 37, the eighth hose 94, the first reserve tank 43, the ninth hose 95, the first radiator 38, and the first hose 96 in this order, and returns to the first pump 86 and the second pump 87.

Note that illustration of the ninth hose 95 is omitted in FIGS. 3, 4, and 13. Instead of providing the ninth hose 95, the first reserve tank 43 and the first radiator 38 may be directly connected to each other.

### [Second Cooling Path]

As shown in FIGS. 3 and 4, the electric tractor A includes a third pump 17 and a battery heater 19. The third pump 17 is disposed below the radiator device K and the second radiator 39. The battery heater 19 is disposed below the lower battery 22.

As shown in FIG. 12, the third pump 17 and the battery heater 19 are included in the second cooling path J2. The third pump 17 may be, for example, configured to be driven by electric power supplied from the second battery 27. The third pump 17 pumps the second coolant.

The battery heater 19 may be, for example, configured to be driven by electric power supplied from the second battery 27. The battery heater 19 heats the second coolant while the upper battery 21 and the lower battery 22 are in a low-temperature state.

The second cooling path J2 includes the upper battery 21, the lower battery 22, the third radiator 40, the second radiator 39, and the second reserve tank 44. That is, the first battery 10 is included in the second cooling path J2.

Further, the second cooling path J2 includes a tenth hose 97, an eleventh hose 98, a twelfth hose 99, a thirteenth hose 100, a fourteenth hose 101, a fifteenth hose 102, and a sixteenth hose 103.

The tenth hose 97 connects the third pump 17 and the battery heater 19. The eleventh hose 98 connects the battery heater 19 and the upper battery 21. The twelfth hose 99 connects the upper battery 21 and the lower battery 22. The thirteenth hose 100 connects the lower battery 22 and the third radiator 40. The fourteenth hose 101 connects the third radiator 40 and the second radiator 39. The fifteenth hose 102 connects the second radiator 39 and the second reserve tank 44. The sixteenth hose 103 connects the second reserve tank 44 and the third pump 17.

As shown in FIGS. 3, 4, and 13, a portion of the fifteenth hose 102 and a portion of the sixteenth hose 103 are located to the left of the upper battery 21. Further, a portion of the sixteenth hose 103 is located to the left of the lower battery 22. The second reserve tank 44 is located to the left of the upper battery 21.

Thus, at least a portion of the second cooling path J2 is located to the left of the first battery 10. Note that the present invention is not limited thereto. For example, the arrangement of the fifteenth hose 102, the sixteenth hose 103, and the second reserve tank 44 may be reversed in the left-right direction.

With the above-described configuration, at least a portion of the first cooling path J1 (more specifically, the third path P3) passes through one of the left and right sides (the right side in the present embodiment) of the first battery 10. Further, at least a portion of the second cooling path J2 passes through the other one of the left and right sides (the left side in the present embodiment) of the first battery 10.

Note that only a portion of the first cooling path J1 may pass through one of the left and right sides of the first battery 10, or the entire first cooling path J1 may pass through one of the left and right sides of the first battery 10. Further, only a portion of the second cooling path J2 may pass through the other one of the left and right sides of the first battery 10, or all of the portions of the second cooling path J2 excluding the first battery 10 may pass through the other one of the left and right sides of the first battery 10.

As shown in FIG. 12, the second coolant pumped by the third pump 17 flows through the tenth hose 97, the battery heater 19, the eleventh hose 98, the upper battery 21, the twelfth hose 99, the lower battery 22, the thirteenth hose 100, the third radiator 40, the fourteenth hose 101, the second radiator 39, the fifteenth hose 102, the second reserve tank 44, and the sixteenth hose 103 in this order, and returns to the third pump 17.

As shown in FIG. 12, the first cooling path J1 and the second cooling path J2 are not in communication with each other. That is, the first cooling path J1 and the second cooling path J2 are independent of each other.

According to the above-described configuration, the first motor 11, which is a power source of the left and right front wheels 1 and the left and right rear wheels 2, and the second motor 12, which is a power source of the work device E, are provided. This facilitates reliably obtaining power (horsepower) required to suitably drive the left and right front wheels 1, the left and right rear wheels 2, and the work device E compared to a case in which a single motor is used as a power source to drive the left and right front wheels 1, the left and right rear wheels 2, and the work device E.

Moreover, according to the above-described configuration, the coolant that has passed through the first radiator 38 passes through the first motor 11 before the second motor 12. Thus, the first motor 11 is preferentially cooled. Accordingly, deterioration of the traveling performance due to an increase in the temperature of the first motor 11 can be prevented.

That is, according to the above-described configuration, it is possible to realize the electric tractor A that is capable of suitably driving the left and right front wheels 1, the left and right rear wheels 2, and the work device E, and has good traveling performance.

According to the above-described configuration, the first motor 11 and the first battery 10 are included in different cooling paths. Thus, the coolant does not pass through one of the first motor 11 and the first battery 10 after passing through the other. This makes it possible to realize the electric tractor A in which the first motor 11 and the first battery 10 are effectively cooled.

### [First Variation]

In the first cooling path J1 of the above embodiment, the first coolant circulates in the directions shown in FIG. 12.

However, the present invention is not limited thereto. The following description of a first variation according to the present invention will focus differences from the above embodiment. Components other than those described below are the same as those of the above embodiment. Components having the same configurations as those of the above embodiment are denoted by the same reference numerals.

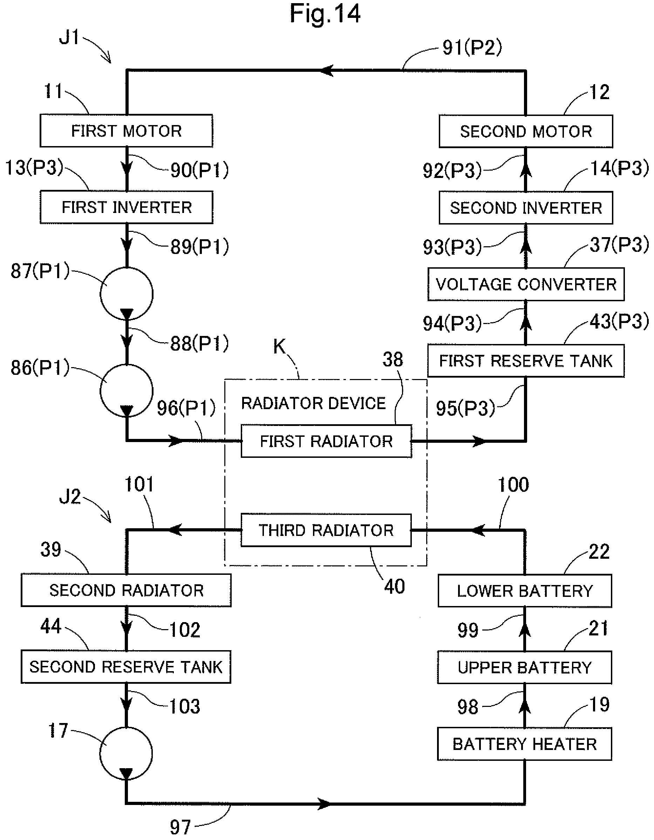

In the first cooling path J1 of the first variation according to the present invention, the direction in which the first pump 86 and the second pump 87 pump the first coolant is opposite to that of the above embodiment. Thus, the first coolant circulates in the direction shown in FIG. 14.

Specifically, in the first path P1, the first coolant flows from the first motor 11 toward the first radiator 38. In the second path P2, the first coolant flows from the second motor 12 toward the first motor 11. In the third path P3, the first coolant flows from the first radiator 38 toward the second motor 12.

That is, the first cooling path J1 includes the first radiator 38 that cools the first coolant, the first path P1 through which the first coolant flows from the first motor 11 toward the first radiator 38, the second path P2 through which the first coolant flows from the second motor 12 toward the first motor 11, and the third path P3 through which the first coolant flows from the first radiator 38 toward the second motor 12.

Further, the circulation direction of the first coolant may be switchable between the direction shown in FIG. 12 and the direction shown in FIG. 14 in accordance with a predetermined manual operation performed by an operator or automatically. That is, the circulation direction of the first coolant may be changeable.

According to the above-described configuration, the first motor 11, which is a power source of the left and right front wheels 1 and the left and right rear wheels 2, and the second motor 12, which is a power source of the work device E, are provided. This facilitates reliably obtaining power (horsepower) required to suitably drive the left and right front wheels 1, the left and right rear wheels 2, and the work device E compared to a case in which a single motor is used as a power source to drive the left and right front wheels 1, the left and right rear wheels 2, and the work device E.

Moreover, according to the above-described configuration, the coolant that has passed through the first radiator 38 passes through the second motor 12 before the first motor 11. Thus, the second motor 12 is preferentially cooled. Accordingly, deterioration of the work performance due to an increase in the temperature of the second motor 12 can be prevented.

That is, according to the above-described configuration, it is possible to realize the electric tractor A that is capable of suitably driving the left and right front wheels 1, the left and right rear wheels 2, and the work device E, and has good work performance.

### [Other Variations]

(1) The arrangement of some or all of the members may be reversed in the left-right direction.
(2) The electric tractor A may include an engine and be configured as a hybrid type.
(3) The number of first batteries 10 provided may be one.
(4) The first inverter 13 need not be included in the first path P1.
(5) The second inverter 14 need not be included in the third path P3.
(6) The first path P1 need not pass below the first battery 10.
(7) The third path P3 need not pass the left side of the first battery 10, nor need it pass the right side of the first battery 10.
(8) A configuration may be used in which power from the first motor 11 is not transmitted to the left and right front wheels 1.
(9) A configuration may be used in which power from the first motor 11 is not transmitted to the left and right rear wheels 2.
(10) The second motor 12 may be omitted.
(11) The first coolant and the second coolant may be of the same type.
(12) The second coolant need not be an insulating oil.
(13) A configuration may be used in which the first coolant and the second coolant are cooled by a single radiator.
(14) The second motor 12 may be included in the second cooling path J2.

Note that the configurations disclosed in the above embodiments (including the variations; the same applies hereinafter) can be applied in combination with configurations disclosed in other embodiments as long as no contradiction arises. Further, the embodiments disclosed herein are illustrative. Embodiments of the present invention are not limited thereto, and various modifications can be made without departing from the object of the present invention.

### Industrial Applicability

The present invention can be applied to an electric tractor.

### Description of Reference Signs

- 1: Front wheel (travel device)
- 2: Rear wheel (travel device)
- 10: First battery (battery)
- 11: First motor
- 12: Second motor
- 13: First inverter
- 14: Second inverter
- 28: PTO shaft (transmission section)
- 29: Mid PTO shaft (transmission section)
- 38: First radiator (radiator)
- 39: Second radiator
- 72: Hydraulic pump
- A: Electric tractor
- E: Work device
- J1: First cooling path (cooling path)
- J2: Second cooling path
- P1: First path
- P2: Second path
- P3: Third path

## Claims

1. An electric tractor comprising:
- a battery;
- a first motor and a second motor configured to perform driving with use of electric power supplied from the battery;
- a travel device configured to be driven by the first motor;
a transmission section configured to transmit driving force of the second motor to a work device;
- a hydraulic pump configured to be driven by the second motor; and
- a cooling path in which a coolant is circulatable,
wherein the cooling path includes: a radiator configured to cool the coolant; a first path through which the coolant is flowable from the radiator toward the first motor; a second path through which the coolant is flowable from the first motor toward the second motor; and a third path through which the coolant is flowable from the second motor toward the radiator.

2. The electric tractor according to claim 1, further comprising:
a first inverter configured to convert DC power from the battery into AC power and supply the AC power to the first motor,
wherein the first inverter is included in the first path.

3. The electric tractor according to claim 1 or 2, further comprising:
a second inverter configured to convert DC power from the battery into AC power and supply the AC power to the second motor,
wherein the second inverter is included in the third path.

4. The electric tractor according to any one of claims 1 to 3, wherein the first path has at least a portion located below the battery.

5. The electric tractor according to any one of claims 1 to 4, wherein the third path has at least a portion located on a left side or a right side of the battery.

6. The electric tractor according to any one of claims 1 to 5, wherein the coolant circulates in a circulating direction that is changeable.

7. An electric tractor comprising:
- a battery;
- a first motor and a second motor configured to perform driving with use of electric power supplied from the battery;
- a travel device configured to be driven by the first motor;
a transmission section configured to transmit driving force of the second motor to a work device;
- a hydraulic pump configured to be driven by the second motor; and
- a cooling path in which a coolant is circulatable,
wherein the cooling path includes: a radiator configured to cool the coolant; a first path through which the coolant is flowable from the first motor toward the radiator; a second path through which the coolant is flowable from the second motor toward the first motor; and a third path through which the coolant is flowable from the radiator toward the second motor.

8. The electric tractor according to claim 7, further comprising:
a first inverter configured to convert DC power from the battery into AC power and supply the AC power to the first motor,
wherein the first inverter is included in the first path.

9. The electric tractor according to claim 7 or 8, further comprising:
a second inverter configured to convert DC power from the battery into AC power and supply the AC power to the second motor,
wherein the second inverter is included in the third path.

10. The electric tractor according to any one of claims 7 to 9,
wherein the first path has at least a portion located below the battery.

11. The electric tractor according to any one of claims 7 to 10,
wherein the third path has at least a portion located on a left side or a right side of the battery.

12. The electric tractor according to any one of claims 7 to 11,
wherein the coolant circulates in a circulating direction that is changeable.

13. An electric tractor comprising:
- a battery;
- a first motor configured to perform driving with use of electric power supplied from the battery;
- a travel device configured to be driven by the first motor;
- a first cooling path in which a first coolant is circulatable; and
- a second cooling path in which a second coolant is circulatable,
wherein
- the first motor is included in the first cooling path, and
- the battery is included in the second cooling path.

14. The electric tractor according to claim 13, wherein the first coolant and the second coolant are of different types.

15. The electric tractor according to claim 13 or 14, wherein the second coolant is an insulating oil.

16. The electric tractor according to any one of claims 13 to 15, further comprising:
- a first radiator included in the first cooling path and configured to cool the first coolant; and
- a second radiator included in the second cooling path and configured to cool the second coolant.

17. The electric tractor according to any one of claims 13 to 16, further comprising:
- a second motor configured to perform driving with use of electric power supplied from the battery;
- a transmission section configured to transmit driving force of the second motor to a work device; and
- a hydraulic pump configured to be driven by the second motor,
wherein the second motor is included in the first cooling path.
